# FASCICULE DE BREVET EUROPEEN

(11) **EP 3 670 932 B1**
(45) Date de publication et mention de la délivrance du brevet: **29.09.2021**
(21) Numéro de dépôt: 19213238.9
(22) Date de dépôt: 03.12.2019
(51) Int. Cl.: F16B 5/00, F16B 5/06, F16B 7/02

(54) **DISPOSITIF D'ASSEMBLAGE DE TYPE VERROU PAR MECANISME DE COINS BIDIRECTIONNEL**
MONTAGEVORRICHTUNG DES VERRIEGELUNGSTYPS MIT EINEM MECHANISMUS MIT BIDIREKTIONALEN KEILEN
ASSEMBLY DEVICE OF THE LOCK TYPE BY MEANS OF A MECHANISM WITH BIDIRECTIONAL WEDGES

(30) Priorité: 18.12.2018 FR 1873204
(43) Date de publication de la demande: 24.06.2020
(73) Titulaire: Commissariat à l'énergie atomique et aux énergies alternatives, 75015 Paris (FR)
(72) Inventeur: CARTERON, Fabien, 91430 IGNY (FR)
(74) Mandataire: Brevalex

(56) Documents cités:
- EP-A2- 0 398 239
- FR-A1- 2 638 210
- JP-U- H0 295 897
- US-A1- 2010 028 077
- US-B2- 9 068 634

## Description

### DOMAINE TECHNIQUE

L'invention se situe dans le domaine des assemblages mécaniques réversibles. Elle concerne un dispositif d'assemblage entre deux pièces mécaniques susceptibles de comporter des alésages pour recevoir les éléments du dispositif d'assemblage.

L'invention s'applique notamment à l'assemblage de pièces mécaniques soumises à des environnements sévères et/ou dont la fiabilité est critique pour la sécurité. Un environnement sévère est par exemple caractérisé par un milieu toxique et/ou corrosif, et/ou par la présence de fortes contraintes mécaniques, de vibrations, d'accélérations importantes et/ou de rayonnements nocifs tels que les rayonnements ionisants, neutroniques, X et gamma. Néanmoins, l'invention s'applique plus généralement à tout assemblage entre deux pièces mécaniques.

### ÉTAT DE LA TECHNIQUE ANTÉRIEURE

Dans le domaine nucléaire, les assemblages soumis à des rayonnements neutroniques sont généralement réalisés par soudage ou par vissage, selon le besoin de réversibilité de l'assemblage. Les assemblages par vissage peuvent s'avérer compliqués à mettre en œuvre dans un environnement nucléaire. En effet, les vis sont des organes d'assemblage aux dimensions relativement réduites et impliquent, pour leur vissage et leur dévissage, une action combinée de rotation et de translation. Or les vis ne sont pas directement accessibles aux opérateurs mais doivent être manipulées par l'intermédiaire de robots, éventuellement dans des espaces confinés. L'utilisation de robots relativement sophistiqués, aptes à effectuer des mouvements précis et de faible amplitude, est donc nécessaire pour la manipulation des vis et l'assemblage des pièces.

La demanderesse a cherché à utiliser divers mécanismes d'assemblage évitant l'utilisation de vis. Néanmoins, les mécanismes d'assemblage de l'état de l'art comprennent souvent de nombreuses pièces interagissant les unes avec les autres. Il en résulte un manque de fiabilité des mécanismes. En outre, certains mécanismes d'assemblage requièrent la présence d'un ressort utilisé pour le rappel d'une ou plusieurs pièces. Or, en présence d'un rayonnement neutronique, les propriétés élastiques d'un ressort sont modifiées. Le ressort peut perdre ses propriétés élastiques en quelques mois seulement et rendre le mécanisme inopérant.

Le document EP 0 398 239 A montre un dispositif de verrouillage selon l'art antérieur.

Les solutions précitées pour assembler des pièces mécaniques ne donnent donc pas entière satisfaction. Un but de l'invention est donc de proposer un dispositif d'assemblage de conception simple et qui reste fiable même en environnement sévère.

### EXPOSÉ DE L'INVENTION

À cet effet, l'invention repose sur une combinaison de deux pièces monoblocs agencées pour former un verrou intégrant un mécanisme de coins bidirectionnel. Une première pièce, appelée « came », forme un organe de commande du verrou et une deuxième pièce, appelée « pêne », forme un organe de verrouillage entre les pièces mécaniques à assembler. La came est agencée pour venir se loger dans un premier alésage formé dans l'une des pièces mécaniques à assembler et y être guidée en translation. Le pêne est agencé pour venir se loger dans un deuxième alésage formé dans la même pièce et y être guidé en translation. Le deuxième alésage débouche dans le premier alésage pour permettre une interaction entre la came et le pêne. Le pêne est en outre agencé pour pouvoir venir se loger par un déplacement en translation dans un troisième alésage formé dans l'autre pièce, ce troisième alésage prolongeant le deuxième alésage dans une position d'assemblage entre les deux pièces. La came et le pêne comprennent chacun deux surfaces d'interaction formant un système de coin pouvant être qualifié de « bidirectionnel » ou « double ». En l'espèce, les surfaces d'interaction sont agencées pour qu'un déplacement en translation de la came dans le premier alésage, dans chaque sens, entraîne un déplacement en translation du pêne dans les deuxième et troisième alésages, dans un sens correspondant. Le pêne est déplacé entre une position déverrouillée, dans laquelle il est uniquement logé dans le deuxième alésage, et une position verrouillée, dans laquelle il est logé à la fois dans le deuxième et le troisième alésage.

Plus précisément, l'invention a pour objet un dispositif d'assemblage pour assembler une première pièce à une deuxième pièce. La première pièce comprend un alésage de guidage de came s'étendant selon un premier axe et un alésage de guidage de pêne s'étendant selon un deuxième axe, non parallèle au premier axe, l'alésage de guidage de pêne débouchant dans l'alésage de guidage de came. La deuxième pièce comprend un alésage d'assemblage s'étendant selon un troisième axe. Les première et deuxième pièces sont agencées pour que, dans une position d'assemblage, l'alésage de guidage de pêne et l'alésage d'assemblage débouchent l'un dans l'autre. Les deuxième et troisième axes sont de préférence confondus dans la position d'assemblage. Le dispositif d'assemblage comprend :
▪ une came agencée pour pouvoir être déplacée en translation selon le premier axe dans ledit alésage de guidage de came, la came comprenant une première surface d'interaction et une deuxième surface d'interaction,
▪ un pêne agencé pour pouvoir, dans la position d'assemblage des première et deuxième pièces, être déplacé en translation selon le deuxième axe entre une position verrouillée, dans laquelle le pêne est inséré à la fois dans l'alésage de guidage de pêne et l'alésage d'assemblage, et une position déverrouillée, dans laquelle le pêne est inséré dans l'alésage de guidage de pêne et non dans l'alésage d'assemblage, le pêne comprenant une troisième surface d'interaction et une quatrième surface d'interaction.
La première surface d'interaction de la came et la troisième surface d'interaction du pêne sont agencées pour pouvoir interagir de sorte qu'un déplacement en translation de la came selon le premier axe dans une première direction entraîne un déplacement du pêne vers la position verrouillée, et la deuxième surface d'interaction de la came et la quatrième surface d'interaction du pêne sont agencées pour pouvoir interagir de sorte qu'un déplacement en translation de la came selon le premier axe dans une deuxième direction, opposée à la première direction, entraîne un déplacement du pêne vers la position déverrouillée.

Il est à noter que le dispositif d'assemblage ne comprend, en plus des deux pièces à assembler, que deux pièces monoblocs dont les formes peuvent être relativement simples. En l'occurrence, la came et le pêne peuvent globalement présenter une forme cylindrique apte à permettre leur guidage en translation. Ils peuvent notamment présenter une forme cylindrique de révolution. De manière générale, le guidage en translation de la came dans l'alésage de guidage de came et le guidage en translation du pêne dans l'alésage de guidage de pêne peuvent correspondre à une liaison glissière ou à une liaison pivot glissant.

L'interaction entre la came et le pêne vers la position verrouillée est, en pratique, réalisée en prévoyant qu'au moins l'une des première et troisième surfaces d'interaction s'étende concomitamment selon le premier axe et selon le deuxième axe. De même, l'interaction entre la came et le pêne vers la position déverrouillée est réalisé en prévoyant qu'au moins l'une des deuxième et quatrième surfaces d'interaction s'étende concomitamment selon le premier axe et selon le deuxième axe. La came et le pêne, et en particulier leurs surfaces d'interaction, forment ainsi un mécanisme de transformation d'un mouvement de translation selon un premier axe en un mouvement de translation selon un deuxième axe, non parallèle au premier.

Selon une forme particulière de réalisation, au moins l'une parmi la première surface d'interaction, la deuxième surface d'interaction, la troisième surface d'interaction et la quatrième surface d'interaction est bombée. Une telle forme bombée permet de générer un rapport cinématique de transmission de mouvement et d'effort variable le long de la course de déplacement de la came et du pêne.

Selon une autre forme particulière de réalisation, compatible avec la précédente, au moins l'une parmi la première surface d'interaction, la deuxième surface d'interaction, la troisième surface d'interaction et la quatrième surface d'interaction est plane. Une surface plane permet de générer rapport cinématique de transmission de mouvement et d'effort constant sur toute la course de déplacement de la came et du pêne. En outre, les surfaces planes présentent l'avantage d'être simples à réaliser par usinage. Dans un mode de réalisation particulier, chacune des surfaces d'interaction de la came et du pêne est plane.

Toujours selon une forme particulière de réalisation, la première surface d'interaction de la came et la troisième surface d'interaction du pêne sont planes et parallèles entre elles. Selon une autre forme particulière de réalisation, compatible avec la précédente, la deuxième surface d'interaction de la came et la quatrième surface d'interaction du pêne sont planes et parallèles entre elles. Des surfaces d'interaction planes et parallèles permettent de maximiser la surface de contact et donc de limiter leur usure.

Le deuxième axe, c'est-à-dire l'axe selon lequel s'étend l'alésage de guidage de pêne, peut être perpendiculaire au premier axe, c'est-à-dire l'axe selon lequel s'étend l'alésage de guidage de came. Ainsi, le déplacement en translation du pêne s'effectue perpendiculairement au déplacement en translation de la came.

Selon une première variante de réalisation, la première surface d'interaction de la came et la troisième surface d'interaction du pêne sont agencées de sorte à empêcher qu'un déplacement du pêne vers la position verrouillée entraîne un déplacement en translation de la came selon le premier axe dans la première direction. Selon une deuxième variante de réalisation, compatible avec la première, la deuxième surface d'interaction de la came et la quatrième surface d'interaction du pêne sont agencées de sorte à empêcher qu'un déplacement du pêne vers la position déverrouillée entraîne un déplacement en translation de la came selon le premier axe dans la deuxième direction. Ainsi, dans ces variantes de réalisation, le déplacement du pêne peut être commandé par le déplacement de la came, mais pas réciproquement. Le dispositif d'assemblage présente un caractère irréversible dans le déplacement du pêne.

Lorsque les surfaces d'interaction de la came et du pêne sont des surfaces planes, les première et deuxième variantes de réalisation peuvent être obtenues en limitant l'angle formé entre ces surfaces et un plan perpendiculaire au deuxième axe. La valeur de l'angle limite doit être déterminée en fonction du coefficient de frottement d'adhérence ou du coefficient de frottement de glissement. Pour la plupart des couples de matériaux aptes à être utilisés pour le dispositif d'assemblage selon l'invention, les coefficients de frottement d'adhérence et de glissement sont inférieurs à 0,25. Pour une telle valeur, l'angle limite est environ égal à 25°. Ainsi, pour la première variante de réalisation, la première surface d'interaction de la came et la troisième surface d'interaction du pêne peuvent s'étendre chacune dans un plan d'interaction formant un angle inférieur ou égal à 25° par rapport à un plan perpendiculaire au deuxième axe. Pour la deuxième variante de réalisation, la deuxième surface d'interaction de la came et la quatrième surface d'interaction du pêne peuvent s'étendre chacune dans un plan d'interaction formant un angle inférieur ou égal à 25° par rapport au plan perpendiculaire au deuxième axe. Afin de garantir le caractère irréversible du déplacement du pêne, des valeurs d'angle limite inférieures peuvent être utilisées, par exemple 10°, 15° ou 20°.

Selon une troisième variante de réalisation, compatible avec la deuxième variante de réalisation, la première surface d'interaction de la came et la troisième surface d'interaction du pêne sont agencées de sorte à permettre qu'un déplacement du pêne vers la position verrouillée entraîne un déplacement en translation de la came selon le premier axe dans la première direction. Selon une quatrième variante de réalisation, compatible avec la première, la deuxième surface d'interaction de la came et la quatrième surface d'interaction du pêne sont agencées de sorte à permettre qu'un déplacement du pêne vers la position déverrouillée entraîne un déplacement en translation de la came selon le premier axe dans la deuxième direction. Ainsi, dans ces troisième et quatrième variantes de réalisation, le déplacement de la came peut être commandé par le pêne. Le dispositif d'assemblage présente un caractère réversible dans le déplacement du pêne.

Lorsque les surfaces d'interaction de la came et du pêne sont des surfaces planes, les troisième et quatrième variantes de réalisation peuvent être obtenues en confiant l'angle formé entre ces surfaces et un plan perpendiculaire au deuxième axe dans une plage de valeurs déterminée en fonction du coefficient de frottement d'adhérence ou du coefficient de frottement de glissement. Pour la plupart des couples de matériaux aptes à être utilisés pour le dispositif d'assemblage selon l'invention, les coefficients de frottement d'adhérence et de glissement sont inférieurs à 0,25. Pour une telle valeur, une plage de valeurs comprises entre 25° et 65° doit permettre une réversibilité du dispositif d'assemblage. Ainsi, pour la troisième variante de réalisation, la première surface d'interaction de la came et la troisième surface d'interaction du pêne peuvent s'étendre chacune dans un plan d'interaction formant un angle compris entre 25° et 65° par rapport au plan perpendiculaire au deuxième axe. Pour la quatrième variante de réalisation, la deuxième surface d'interaction de la came et la quatrième surface d'interaction du pêne peuvent s'étendre chacune dans un plan d'interaction formant un angle compris entre 25° et 65° par rapport au plan perpendiculaire au deuxième axe.

Selon une forme particulière de réalisation, la came comporte une première et une deuxième jambes de guidage s'étendant parallèlement au premier axe et étant agencées de part et d'autre des première et deuxième surface d'interaction, la première jambe de guidage comportant une première surface latérale d'appui s'étendant dans un premier plan parallèle aux premier et deuxième axes, la deuxième jambe de guidage comportant une deuxième surface latérale d'appui s'étendant dans un deuxième plan parallèle aux premier et deuxième axes, le pêne comportant une première et une deuxième ouvertures traversantes s'étendant parallèlement au premier axe et étant agencées de part et d'autre des troisième et quatrième surfaces d'interaction, la première ouverture traversante définissant une troisième surface latérale d'appui et la deuxième ouverture traversante définissant une quatrième surface latérale d'appui, les première et troisième surfaces latérales d'appui étant agencées pour pouvoir interagir de manière à guider en translation selon les premier et deuxième axes le déplacement du pêne par rapport à la came, et les deuxième et quatrième surfaces latérales d'appui étant agencées pour pouvoir interagir de manière à guider en translation selon les premier et deuxième axes le déplacement du pêne par rapport à la came. Avantageusement, les surfaces latérales d'appui présentent entre elles un ajustement avec jeu, afin de permettre leur déplacement relatif.

En outre, chaque jambe de guidage peut comporter une surface externe de guidage dont la forme est complémentaire à celle de l'alésage de guidage de came. Ainsi, les jambes de guidage participent au guidage en translation selon le premier axe de la came dans ledit alésage de guidage de came. De même, les surfaces externes de guidage sont avantageusement agencées de manière à présenter un ajustement avec jeu dans l'alésage de guidage de came.

Toujours selon une forme particulière de réalisation, la came comprend un tronçon de guidage et un tronçon d'interaction. Le tronçon de guidage présente une surface complémentaire à l'alésage de guidage de came, de manière à guider en translation selon le premier axe la came dans ledit alésage de guidage de came. Le tronçon de guidage et l'alésage de guidage de came présentent par exemple une surface cylindrique selon le premier axe. La surface cylindrique peut être à section circulaire. Avantageusement, le tronçon de guidage et l'alésage de guidage de came sont agencés pour présenter entre eux un ajustement avec jeu. Le tronçon d'interaction comprend les première et deuxième surfaces d'interaction. Lorsque la came comporte des jambes de guidage s'étendant de part et d'autre des première et deuxième surfaces d'interaction, le tronçon d'interaction assure à la fois une fonction de transformation du mouvement et une fonction de guidage en translation selon le premier axe.

L'invention a également pour objet un assemblage comprenant une première pièce, une deuxième pièce, et un dispositif d'assemblage tel que décrit précédemment. La première pièce comprend un alésage de guidage de came s'étendant selon un premier axe et un alésage de guidage de pêne s'étendant selon un deuxième axe, non parallèle au premier axe, l'alésage de guidage de pêne débouchant dans l'alésage de guidage de came. La deuxième pièce comprend un alésage d'assemblage s'étendant selon un troisième axe. Les première et deuxième pièces sont agencées pour que, dans une position d'assemblage, l'alésage de guidage de pêne et l'alésage d'assemblage débouchent l'un dans l'autre, les deuxième et troisième axes étant de préférence confondus.

### BRÈVE DESCRIPTION DES DESSINS

D'autres caractéristiques, détails et avantages de l'invention ressortiront à la lecture de la description qui va suivre, donnée uniquement à titre d'exemple et faisant référence aux dessins annexés sur lesquels :
- la figure 1A représente, dans une vue en perspective, une came d'un exemple de dispositif d'assemblage selon l'invention ;
- la figure 1B représente, dans une vue en perspective analogue à celle de la figure 1A, un pêne de l'exemple de dispositif d'assemblage selon l'invention ;
- la figure 1C représente, dans une vue en perspective analogue à celle des figures 1A et 1B, la came et le pêne de l'exemple de dispositif d'assemblage selon l'invention, dans une configuration assemblée ;
- la figure 2A représente, dans une vue en perspective, un exemple de pièce configurée pour accueillir le dispositif d'assemblage des figures 1A, 1B et 1C ;
- la figure 2B représente, dans une vue en perspective analogue à celle de la figure 2A, la pièce de la figure 2A dans laquelle est monté le dispositif d'assemblage des figures 1A, 1B et 1C ;
- la figure 3A représente, dans une vue en coupe longitudinale selon un premier plan, un exemple d'assemblage comprenant deux pièces et le dispositif d'assemblage des figures 1A, 1B et 1C dans une configuration verrouillée ;
- la figure 3B représente l'assemblage de la figure 3A dans une vue en coupe longitudinale selon un deuxième plan, perpendiculaire au premier;
- la figure 4A représente, dans une vue en coupe longitudinale selon le premier plan, l'assemblage des figures 3A et 3B dans une configuration déverrouillée ;
- la figure 4B représente l'assemblage de la figure 4A dans la vue en coupe longitudinale de la figure 3B ;
- la figure 5 représente, dans une vue en coupe longitudinale, un exemple d'assemblage comprenant deux viroles et deux dispositifs d'assemblage selon l'invention.

### EXPOSÉ DÉTAILLÉ DE MODES DE RÉALISATION PARTICULIERS

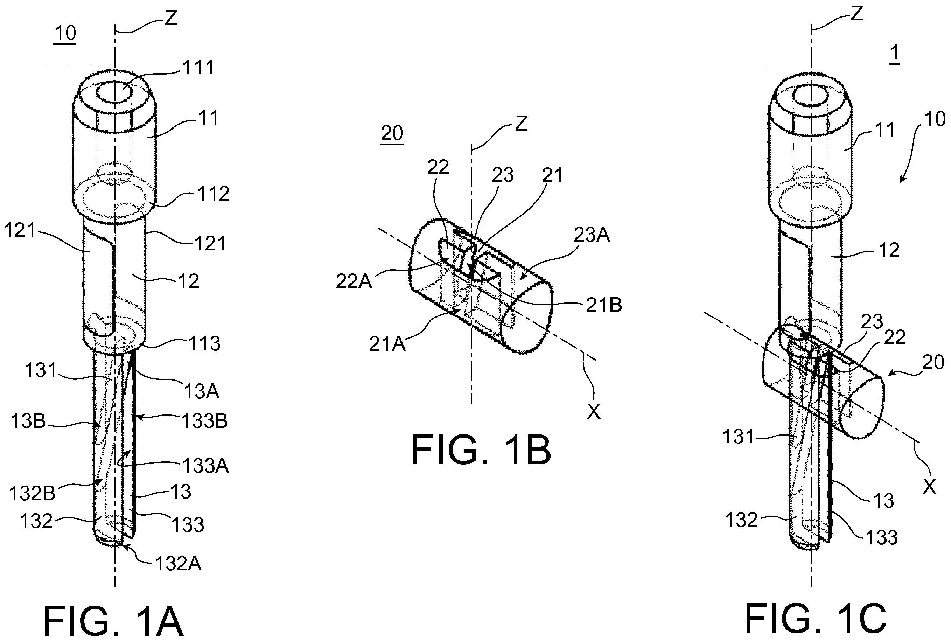

Les figures 1A, 1B et 1C représentent, dans une vue en perspective, un exemple de dispositif d'assemblage selon l'invention. Le dispositif d'assemblage 1 comprend une came 10 et un pêne 20 aptes à coopérer entre eux pour effectuer une transformation de mouvement et obtenir un assemblage entre deux pièces mécaniques, non représentées sur ces figures. La figure 1A représente uniquement la came 10, la figure 1B représente uniquement le pêne 20 et la figure 1C représente la came 10 et le pêne 20 dans une configuration assemblée.

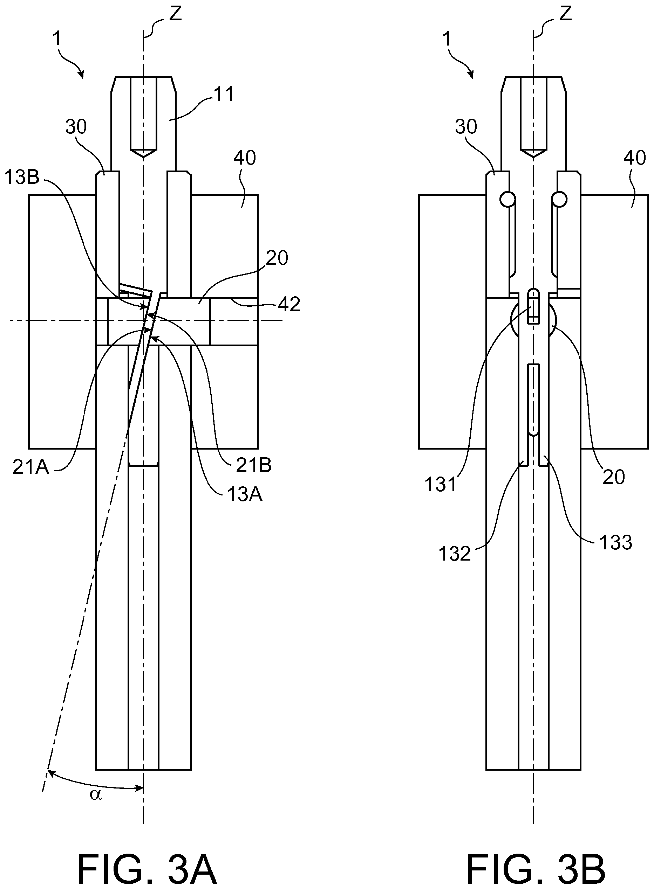

La came 10 comprend successivement, en suivant un axe Z, une tête 11, un tronçon de guidage 12 et un tronçon d'interaction 13. La tête 11, le tronçon de guidage 12 et le tronçon d'interaction 13 présentent chacun une forme globale cylindrique circulaire selon l'axe Z. La tête 11 comprend un logement 111 s'étendant selon l'axe Z et débouchant sur une première extrémité longitudinale de la came 10. Le logement 111 peut comprendre un taraudage, non représenté, permettant la fixation à un bras robotisé. Le tronçon de guidage 12 présente une forme cylindrique de révolution selon l'axe Z, à l'exception de deux méplats 121 s'étendant dans des plans parallèles à un plan XZ passant l'axe Z et un axe X, perpendiculaire à l'axe Z. Les méplats 121 sont aptes à équilibrer un moment de torsion qui serait exercé sur la came selon l'axe Z et à limiter une course de déplacement en translation selon l'axe Z de la came 10. Les méplats 121 ne sont pas indispensables au fonctionnement du dispositif d'assemblage 1, en particulier en l'absence d'application d'un moment de torsion éventuellement préjudiciable à la came et au pêne et en cas de course de came maîtrisée par ailleurs. Le diamètre du tronçon de guidage 12 est inférieur au diamètre de la tête 11, de sorte qu'un premier épaulement 112 est formé. Cet épaulement permet de constituer un appui particulièrement résistant mais n'est pas indispensable au fonctionnement. Le tronçon d'interaction 13 comprend un organe d'interaction 131 présentant une première surface d'interaction 13A et une deuxième surface d'interaction 13B. Les surfaces d'interaction 13A, 13B sont planes et parallèles entre elles. Elles s'étendent concomitamment selon l'axe X et l'axe Z. Ainsi, chaque surface d'interaction 13A, 13B s'inscrit dans un plan incliné par rapport aux axes X et Z. Dans l'exemple de réalisation des figures 1A à 1C, chaque surface d'interaction 13A, 13B s'étend dans un plan formant un angle α, représenté sur la figure 3A, égal à 30°. Le tronçon d'interaction 13 comporte en outre une première jambe de guidage 132 et une deuxième jambe de guidage 133. Les jambes de guidage 132, 133 s'étendent parallèlement à l'axe Z, de part et d'autre de l'organe d'interaction 131. La jambe de guidage 132 présente une première surface latérale d'appui 132A et une première surface externe de guidage 132B. La jambe de guidage 133 présente une deuxième surface latérale d'appui 133A et une deuxième surface externe de guidage 133B. Chaque surface latérale d'appui 132A, 133A est plane et s'étend dans un plan parallèle au plan XZ. Chaque surface externe de guidage 132B, 133B est cylindrique de révolution autour de l'axe Z. Le diamètre des jambes de guidage 132, 133, au niveau des surfaces externes de guidage 132B, 133B, est inférieur au diamètre du tronçon de guidage 12, de sorte qu'un deuxième épaulement 113 est formé entre le tronçon de guidage 12 et le tronçon d'interaction 13. On note cependant que la came 10 représentée sur les figures 1A, 1B et 1C correspond à une mise en forme particulière de l'invention. Ainsi, l'épaulement 113 n'est pas indispensable au fonctionnement du dispositif d'assemblage 1. Dans un autre exemple de réalisation, la came pourrait présenter une forme plus simple, à savoir une forme générale cylindrique de révolution avec un tronçon d'interaction intégré dans un même diamètre, la course de came pouvant alors être limitée par ailleurs et la transmission d'un moment de torsion susceptible d'être préjudiciable au tronçon d'interaction pouvant également être empêchée par ailleurs, par exemple à l'aide de méplats, comme dans l'exemple des figures 1A, 1B et 1C.

Le pêne 20 présente globalement une forme cylindrique de révolution selon l'axe X. Il comprend un trou traversant 21 formant une troisième surface d'interaction 21A et une quatrième surface d'interaction 21B. Les surfaces d'interaction 21A, 21B sont planes et parallèles entre elles. Elles sont en outre parallèles aux surfaces d'interaction 13A, 13B de la came 10. La came 10 et le pêne 20 sont agencés de sorte que les surfaces d'interaction 13A et 21A puissent venir au contact l'une de l'autre pour interagir. En l'occurrence, un déplacement en translation, dans une première direction selon l'axe Z (vers le bas sur la figure 1C), de la came 10 entraîne un déplacement en translation, dans une première direction selon l'axe X (vers la droite sur la figure 1C), du pêne 20. La came 10 et le pêne 20 sont de plus agencés de sorte que les surfaces d'interaction 13B et 21B puissent venir au contact l'une de l'autre pour interagir. En l'occurrence, un déplacement en translation, dans une deuxième direction selon l'axe Z (vers le haut sur la figure 1C), de la came 10 entraîne un déplacement en translation, dans une deuxième direction selon l'axe X (vers la gauche sur la figure 1C), du pêne 20. Le pêne 20 comprend en outre une première ouverture traversante 22 et une deuxième ouverture traversante 23. Les ouvertures traversantes 22 et 23 s'étendent parallèlement à l'axe Z, de part et d'autre du trou traversant 21. Elles sont agencées de manière à pouvoir recevoir chacune une jambe de guidage 132, 133 et permettre leur déplacement en translation par rapport au pêne 20 à la fois selon l'axe Z et selon l'axe X. En l'occurrence, l'ouverture traversante 22 définit une troisième surface latérale d'appui 22A, parallèle à la première surface latérale d'appui 132A de la première jambe de guidage 132, et apte à venir à son contact pour guider en translation la première jambe de guidage 132. L'ouverture traversante 23 définit une quatrième surface latérale d'appui 23A, parallèle à la deuxième surface latérale d'appui 133A de la deuxième jambe de guidage 133, et apte à venir à son contact pour guider en translation la deuxième jambe de guidage 133.

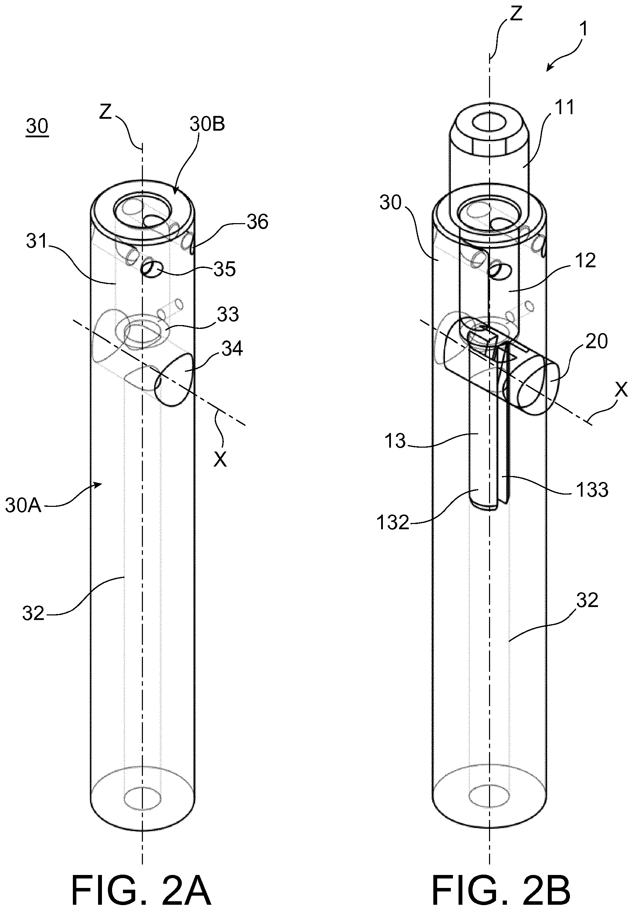

Les figures 2A et 2B représentent respectivement, dans une vue en perspective, un exemple de première pièce 30 configurée pour accueillir le dispositif d'assemblage 1 des figures 1A, 1B et 1C, et ledit dispositif d'assemblage 1 monté dans la pièce 30. La pièce 30 comporte une surface externe 30A de forme cylindrique de révolution selon l'axe Z, une surface d'appui 30B, un premier alésage de guidage de came 31 et un deuxième alésage de guidage de came 32 s'étendant chacun selon l'axe Z. La surface d'appui 30B s'étend dans un plan parallèle à un plan XY, passant l'axe X et un axe Y, les axes X, Y et Z définissant un repère orthogonal. La surface d'appui 30B forme une surface sur laquelle l'épaulement 112 de la came 10 peut venir s'appuyer. L'alésage de guidage de came 31 présente une forme cylindrique de révolution selon l'axe Z, complémentaire à la forme du tronçon de guidage 12 de la came 10. L'alésage de guidage de came 32 présente une forme cylindrique de révolution selon l'axe Z, complémentaire à la forme du tronçon d'interaction 13, et plus particulièrement des surfaces externes de guidage 132B, 133B. La came 10 peut alors être montée en liaison pivot glissant selon l'axe Z dans la pièce 30. L'alésage de guidage de came 32 débouche dans l'alésage de guidage de came 31 et présente un diamètre inférieur à celui de l'alésage de guidage de came 31, de manière à former un épaulement 33. La pièce 30 comporte en outre un alésage de guidage de pêne 34 s'étendant selon l'axe X en traversant l'alésage de guidage de came 32. L'alésage de guidage de pêne 34 présente une forme cylindrique de révolution selon l'axe X, complémentaire à la forme du pêne 20. Le pêne 20 peut alors être monté en liaison pivot glissant selon l'axe X dans la pièce 30. La pièce 30 comporte de plus des ouvertures traversantes 35, 36 s'étendant parallèlement à l'axe X et permettant de loger des vis, non représentées, aptes à empêcher une rotation selon l'axe Z de la came 10 dans la pièce 30.

Les figures 3A et 3B représentent le dispositif d'assemblage 1 et la première pièce 30 montés dans une deuxième pièce 40, dans une configuration verrouillée. Elles représentent respectivement ces éléments dans une vue en coupe selon le plan XZ et selon un plan YZ. La deuxième pièce 40 comprend une ouverture traversante 41 s'étendant selon l'axe Z et présentant une forme cylindrique de révolution selon ce même axe Z, la forme étant complémentaire à celle de la surface externe 30A de la première pièce 30, de manière à l'accueillir. La deuxième pièce 40 comprend en outre un alésage d'assemblage 42 s'étendant selon l'axe X et présentant une forme cylindrique de révolution selon l'axe X, complémentaire à celle du pêne 20. Dans cette configuration verrouillée, la came 10 est insérée au maximum dans la première pièce 30, l'épaulement 112 étant en appui sur la surface d'appui 30B. En outre, le pêne 20 est inséré à la fois dans l'alésage de guidage de pêne 34 de la première pièce 30 et dans l'alésage d'assemblage 42 de la deuxième pièce 40.

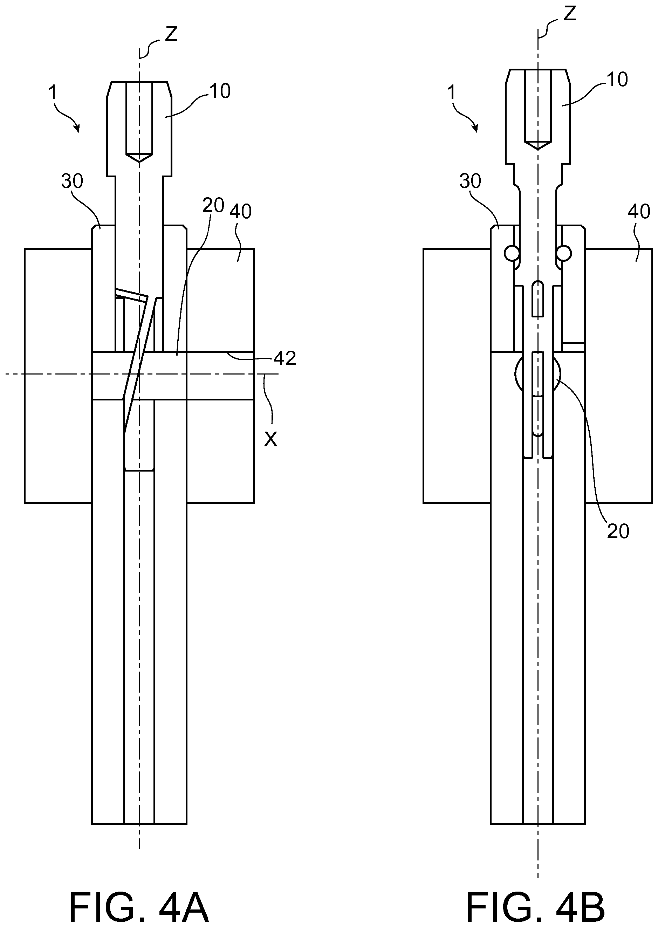

Les figures 4A et 4B représentent le dispositif d'assemblage 1 et la première pièce 30 montés dans la deuxième pièce 40, dans une configuration déverrouillée. Elles représentent ces éléments dans les vues respectives des figures 3A et 3B. Dans cette configuration déverrouillée, la came 10 est remontée par rapport à la configuration verrouillée, l'épaulement 112 n'étant pas en appui sur la surface d'appui 30B. En outre, le pêne 20 est inséré dans l'alésage de guidage de pêne 34 de la première pièce 30 mais pas dans l'alésage d'assemblage 42 de la deuxième pièce 40.

Le passage de la configuration déverrouillée à la configuration verrouillée s'effectue par déplacement vers le bas de la came 10. La surface d'interaction 13A de la came 10 exerce un effort sur la surface d'interaction 21A du pêne 20, entraînant son déplacement vers la droite sur les figures 3A et 4A. Le passage de la configuration verrouillée à la configuration déverrouillée s'effectue par déplacement vers le haut de la came 10. La surface d'interaction 13B de la came 10 exerce un effort sur la surface d'interaction 21B du pêne 20, entraînant son déplacement vers la gauche sur les figures 3A et 4A.

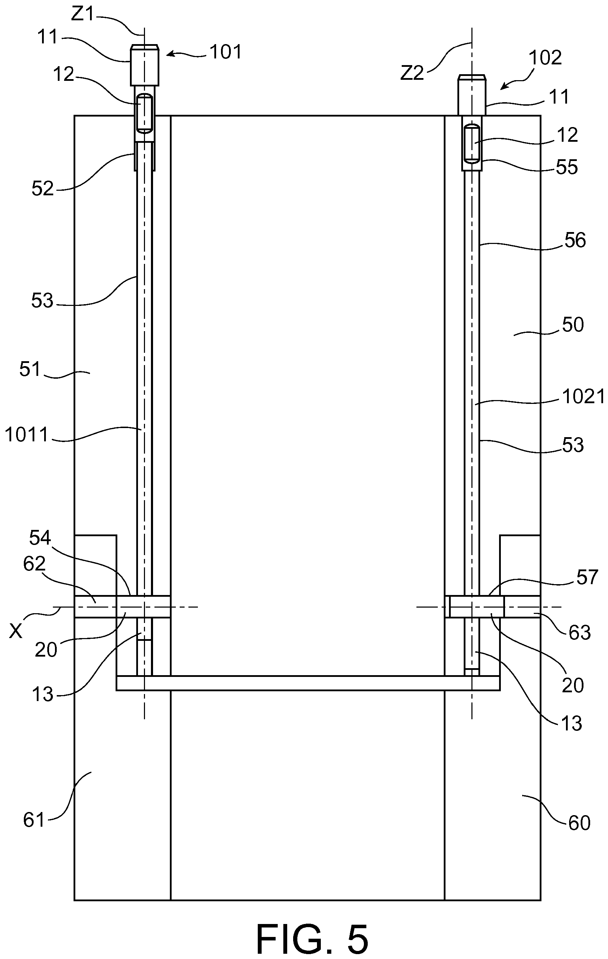

La figure 5 représente, dans une vue en coupe longitudinale, un exemple d'assemblage comprenant deux viroles et deux exemples de dispositifs d'assemblage selon l'invention. Les viroles 50, 60 se présentent sous forme de tubes creux et sont positionnées dans une configuration d'assemblage au moyen de formes complémentaires formées dans leur paroi 51, 61. La virole 50 comprend un premier alésage de guidage de came 52 et un deuxième alésage de guidage de came 53 s'étendant de manière concentrique selon un premier axe Z1, et un premier alésage de guidage de pêne 54 s'étendant selon un axe X. La virole 50 comprend en outre un troisième alésage de guidage de came 55 et un quatrième alésage de guidage de came 56 s'étendant de manière concentrique selon un deuxième axe Z2, et un deuxième alésage de guidage de pêne 57 s'étendant selon l'axe X. De manière analogue à l'assemblage des figures 3A, 3B, 4A et 4B, les alésages de guidage de came 52, 53 et l'alésage de guidage de pêne 54 reçoivent un premier dispositif d'assemblage 101 et les alésages de guidage de came 55, 56 et l'alésage de guidage de pêne 57 reçoivent un deuxième dispositif d'assemblage 102. Les dispositifs d'assemblage 101, 102 sont identiques au dispositif d'assemblage 1 décrit en référence aux figures 1A à 1C, hormis qu'ils présentent de plus chacun une tige 1011, 1021 reliant le tronçon de guidage 12 au tronçon d'interaction 13. La présence de tiges 1011, 1021 permet de déporter les têtes 11 des cames 10 à distance des tronçons d'interaction 13. Ainsi, les têtes 11 peuvent être exposées à un environnement moins sévère que les tronçons d'interaction 13 et ainsi être manipulées par l'intermédiaire d'organes mécaniques sensibles à un environnement sévère. La virole 60 comporte deux alésages d'assemblage 62, 63 s'étendant chacun selon l'axe X et agencés pour recevoir chacun un pêne 20 dans la configuration verrouillée.

À la lecture de la description qui précède, il peut être remarqué que le dispositif d'assemblage est réduit à deux pièces monoblocs de formes relativement simples. Il en résulte une simplicité de fabrication et une robustesse de fonctionnement. Par ailleurs, la came et le pêne sont largement guidés dans leurs alésages respectifs, procurant ainsi une excellente tenue mécanique, y compris en cas de transmission d'efforts entre les deux pièces à assembler. Le dispositif d'assemblage est compact et peut être intégré dans tout type de pièce à assembler.

## Revendications

1. Dispositif d'assemblage pour assembler une première pièce (30, 50) à une deuxième pièce (40, 60), la première pièce comprenant un alésage de guidage de came (31, 32, 52, 53, 55, 56) s'étendant selon un premier axe (Z, Z₁, Z₂) et un alésage de guidage de pêne (34, 54, 57) s'étendant selon un deuxième axe (X), non parallèle au premier axe (Z, Z₁, Z₂), l'alésage de guidage de pêne débouchant dans l'alésage de guidage de came, la deuxième pièce (40) comprenant un alésage d'assemblage (42, 62, 63) s'étendant selon un troisième axe (X), les première et deuxième pièces étant agencées pour que, dans une position d'assemblage, l'alésage de guidage de pêne (34, 54, 57) et l'alésage d'assemblage (42, 62, 63) débouchent l'un dans l'autre, le dispositif d'assemblage (1, 101, 102) comprenant :
▪ une came (10) agencée pour pouvoir être déplacée en translation selon le premier axe (Z, Z₁, Z₂) dans ledit alésage de guidage de came (31, 32, 52, 53, 55, 56), la came comprenant une première surface d'interaction (13A) et une deuxième surface d'interaction (13B),
▪ un pêne (20) agencé pour pouvoir, dans la position d'assemblage des première et deuxième pièces, être déplacé en translation selon le deuxième axe (X) entre une position verrouillée, dans laquelle le pêne est inséré à la fois dans l'alésage de guidage de pêne (34, 54, 57) et l'alésage d'assemblage (42, 62, 63), et une position déverrouillée, dans laquelle le pêne est inséré dans l'alésage de guidage de pêne (34, 54, 57) et non dans l'alésage d'assemblage (42, 62, 63), le pêne comprenant une troisième surface d'interaction (21A) et une quatrième surface d'interaction (21B),
la première surface d'interaction (13A) de la came (10) et la troisième surface d'interaction (21A) du pêne (20) étant agencées pour pouvoir interagir de sorte qu'un déplacement en translation de la came (10) selon le premier axe (Z, Z₁, Z₂) dans une première direction entraîne un déplacement du pêne (20) vers la position verrouillée, et la deuxième surface d'interaction (13B) de la came (10) et la quatrième surface d'interaction (21B) du pêne (20) étant agencées pour pouvoir interagir de sorte qu'un déplacement en translation de la came (10) selon le premier axe (Z, Z₁, Z₂) dans une deuxième direction, opposée à la première direction, entraîne un déplacement du pêne (20) vers la position déverrouillée.

2. Dispositif d'assemblage selon la revendication 1, dans lequel au moins l'une parmi la première surface d'interaction (13A), la deuxième surface d'interaction (13B), la troisième surface d'interaction (21A) et la quatrième surface d'interaction (21B) est bombée.

3. Dispositif d'assemblage selon l'une des revendications 1 et 2, dans lequel au moins l'une parmi la première surface d'interaction (13A), la deuxième surface d'interaction (13B), la troisième surface d'interaction (21A) et la quatrième surface d'interaction (21B) est plane.

4. Dispositif d'assemblage selon la revendication 1, dans lequel la première surface d'interaction (13A) de la came (10) et la troisième surface d'interaction (21A) du pêne (20) sont planes et parallèles entre elles et/ou la deuxième surface d'interaction (13B) de la came et la quatrième surface d'interaction (21B) du pêne (20) sont planes et parallèles entre elles.

5. Dispositif d'assemblage selon l'une des revendications 1 à 4, dans lequel le deuxième axe (X) est perpendiculaire au premier axe (Z, Z₁, Z₂).

6. Dispositif d'assemblage selon l'une des revendications 1 à 5, dans lequel la première surface d'interaction (13A) de la came (10) et la troisième surface d'interaction (21A) du pêne (20) sont agencées de sorte à empêcher qu'un déplacement du pêne (20) vers la position verrouillée entraîne un déplacement en translation de la came (10) selon le premier axe (Z, Z₁, Z₂) dans la première direction, et/ou la deuxième surface d'interaction (13B) de la came (10) et la quatrième surface d'interaction (21B) du pêne (20) sont agencées de sorte à empêcher qu'un déplacement du pêne (20) vers la position déverrouillée entraîne un déplacement en translation de la came (10) selon le premier axe (Z, Z₁, Z₂) dans la deuxième direction.

7. Dispositif d'assemblage selon les revendications 4 à 6, dans lequel la première surface d'interaction (13A) de la came (10) et la troisième surface d'interaction (21A) du pêne (20) s'étendent chacune dans un plan d'interaction formant un angle inférieur ou égal à 25° par rapport à un plan perpendiculaire au deuxième axe (X), et/ou la deuxième surface d'interaction (13B) de la came (10) et la quatrième surface d'interaction (21B) du pêne (20) s'étendent chacune dans un plan d'interaction formant un angle inférieur ou égal à 25° par rapport au plan perpendiculaire au deuxième axe (X).

8. Dispositif d'assemblage selon l'une des revendications 1 à 5, dans lequel la première surface d'interaction (13A) de la came (10) et la troisième surface d'interaction (21A) du pêne (20) sont agencées de sorte à permettre qu'un déplacement du pêne (20) vers la position verrouillée entraîne un déplacement en translation de la came (10) selon le premier axe (Z, Z₁, Z₂) dans la première direction, et/ou la deuxième surface d'interaction (13B) de la came (10) et la quatrième surface d'interaction (21B) du pêne (20) sont agencées de sorte à permettre qu'un déplacement du pêne (20) vers la position déverrouillée entraîne un déplacement en translation de la came (10) selon le premier axe (Z, Z₁, Z₂) dans la deuxième direction.

9. Dispositif d'assemblage selon les revendications 4, 5 et 8, dans lequel la première surface d'interaction (13A) de la came (10) et la troisième surface d'interaction (21A) du pêne (20) s'étendent chacune dans un plan d'interaction formant un angle compris entre 25° et 65° par rapport à un plan perpendiculaire au deuxième axe (X), et/ou la deuxième surface d'interaction (13B) de la came (10) et la quatrième surface d'interaction (21B) du pêne (20) s'étendent chacune dans un plan d'interaction formant un angle compris entre 25° et 65° par rapport au plan perpendiculaire au deuxième axe (X).

10. Dispositif d'assemblage selon l'une des revendications 1 à 9, dans lequel la came (10) comporte une première et une deuxième jambes de guidage (132, 133) s'étendant parallèlement au premier axe (Z, Z₁, Z₂) et étant agencées de part et d'autre des première et deuxième surface d'interaction (13A, 13B), la première jambe de guidage (132) comportant une première surface latérale d'appui (132A) s'étendant dans un premier plan parallèle aux premier et deuxième axes (Z, Z₁, Z₂, X), la deuxième jambe de guidage (133) comportant une deuxième surface latérale d'appui (133A) s'étendant dans un deuxième plan parallèle aux premier et deuxième axes (Z, Z₁, Z₂, X), le pêne (20) comportant une première et une deuxième ouvertures traversantes (22, 23) s'étendant parallèlement au premier axe (Z, Z₁, Z₂) et étant agencées de part et d'autre des troisième et quatrième surfaces d'interaction (21A, 21B), la première ouverture traversante (22) définissant une troisième surface latérale d'appui (22A) et la deuxième ouverture traversante (23) définissant une quatrième surface latérale d'appui (23A), les première et troisième surfaces latérales d'appui (132A, 22A) étant agencées pour pouvoir interagir de manière à guider en translation selon les premier et deuxième axes (Z, Z₁, Z₂, X) le déplacement du pêne par rapport à la came, et les deuxième et quatrième surfaces latérales d'appui (133A, 23A) étant agencées pour pouvoir interagir de manière à guider en translation selon les premier et deuxième axes le déplacement du pêne par rapport à la came.

## Patentansprüche

1. Montagevorrichtung zum Montieren eines ersten Werkstücks (30, 50) an einem zweiten Werkstück (40, 60), wobei das erste Werkstück eine Bohrung zur Führung eines Nockens (31, 32, 52, 53, 55, 56) umfasst, die sich entlang einer ersten Achse (Z, Z₁, Z₂), erstreckt, und eine Bohrung zur Führung eines Riegels (34, 54, 57), die sich entlang einer zweiten Achse (X) erstreckt, die nicht parallel zur ersten Achse (Z, Z₁, Z₂) ist, wobei die Riegelführungsbohrung in die Nockenführungsbohrung mündet, wobei das zweite Werkstück (40) eine Montagebohrung (42, 62, 63) umfasst, die sich entlang einer dritten Achse (X) erstreckt, wobei das erste und das zweite Werkstück derart ausgelegt sind, dass in einer Montageposition die Riegelführungsbohrung (34, 54, 57) und die Montagebohrung (42, 62, 63) ineinander münden, wobei die Montagevorrichtung (1, 101, 102) umfasst:
• einen Nocken (10), der dazu ausgelegt ist, in Translation entlang der ersten Achse (Z, Z₁, Z₂) in der Nockenführungsbohrung (31, 32, 52, 53, 55, 56) verlagert werden zu können, wobei der Nocken eine erste Interaktionsoberfläche (13A) und eine zweite Interaktionsoberfläche (13B) umfasst,
• einen Riegel (20), der dazu ausgelegt ist, in der Montageposition des ersten und des zweiten Werkstücks in Translation entlang der zweiten Achse (X) verlagert werden zu können zwischen einer verriegelten Position, in der der Riegel gleichzeitig in die Riegelführungsbohrung (34, 54, 57) und die Montagebohrung (42, 62, 63) eingesetzt ist, und einer entriegelten Position, in der der Riegel in die Riegelführungsbohrung (34, 54, 57) eingesetzt ist, aber nicht in die Montagebohrung (42, 62, 63), wobei der Riegel eine dritte Interaktionsoberfläche (21A) und eine vierte Interaktionsoberfläche (21B) umfasst,
wobei die erste Interaktionsoberfläche (13A) des Nockens (10) und die dritte Interaktionsoberfläche (21A) des Riegels (20) dazu ausgelegt sind, derart interagieren zu können, dass eine Verlagerung des Nockens (10) in Translation entlang der ersten Achse (Z, Z₁, Z₂) in einer ersten Richtung eine Verlagerung des Riegels (20) in Richtung der verriegelten Position auslöst, und die zweite Interaktionsoberfläche (13B) des Nockens (10) und die vierte Interaktionsoberfläche (21B) des Riegels (20) dazu ausgelegt sind, derart interagieren zu können, dass eine Verlagerung des Nockens (10) in Translation entlang der ersten Achse (Z, Z₁, Z₂) in einer zweiten Richtung entgegengesetzt zur ersten Richtung eine Verlagerung des Riegels (20) in Richtung der entriegelten Position auslöst.

2. Montagevorrichtung nach Anspruch 1, bei der wenigstens eine von der ersten Interaktionsoberfläche (13A), der zweiten Interaktionsoberfläche (13B), der dritten Interaktionsoberfläche (21A) und der vierten Interaktionsoberfläche (21B) gewölbt ist.

3. Montagevorrichtung nach einem der Ansprüche 1 und 2, bei der wenigstens eine von der ersten Interaktionsoberfläche (13A), der zweiten Interaktionsoberfläche (13B), der dritten Interaktionsoberfläche (21A) und der vierten Interaktionsoberfläche (21B) plan ist.

4. Montagevorrichtung nach Anspruch 1, bei der die erste Interaktionsoberfläche (13A) des Nockens (10) und die dritte Interaktionsoberfläche (21A) des Riegels (20) plan und zueinander parallel sind, und/oder die zweite Interaktionsoberfläche (13B) des Nockens und die vierte Interaktionsoberfläche (21B) des Riegels plan und zueinander parallel sind.

5. Montagevorrichtung nach einem der Ansprüche 1 bis 4, bei der die zweite Achse (X) orthogonal zur ersten Achse (Z, Z₁, Z₂) ist.

6. Montagevorrichtung nach einem der Ansprüche 1 bis 5, bei der die erste Interaktionsoberfläche (13A) des Nockens (10) und die dritte Interaktionsoberfläche (21A) des Riegels (20) derart ausgelegt sind, dass sie verhindern, dass eine Verlagerung des Riegels (20) in Richtung der verriegelten Position eine Verlagerung des Nockens (10) in Translation entlang der ersten Achse (Z, Z₁, Z₂) in der ersten Richtung auslöst, und/oder die zweite Interaktionsoberfläche (13B) des Nockens (10) und die vierte Interaktionsoberfläche (21B) des Riegels (20) derart ausgelegt sind, dass sie verhindern, dass eine Verlagerung des Riegels (20) in Richtung der entriegelten Position eine Verlagerung des Nockens (10) in Translation entlang der ersten Achse (Z, Z₁, Z₂) in der zweiten Richtung auslöst.

7. Montagevorrichtung nach den Ansprüchen 4 bis 6, bei der die erste Interaktionsoberfläche (13A) des Nockens (10) und die dritte Interaktionsoberfläche (21A) des Riegel (20) sich jeweils in einer Interaktionsebene erstrecken, die einen Winkel kleiner oder gleich 25° mit Bezug zu einer Ebene orthogonal zur zweiten Achse (X) bildet, und/oder die zweite Interaktionsoberfläche (13B) des Nockens (10) und die vierte Interaktionsoberfläche (21B) des Riegels (20) sich jeweils in einer Interaktionsebene erstrecken, die einen Winkel kleiner oder gleich 25° mit Bezug zu der Ebene orthogonal zur zweiten Achse (X) bildet.

8. Montagevorrichtung nach einem der Ansprüche 1 bis 5, bei der die erste Interaktionsoberfläche (13A) des Nockens (10) und die dritte Interaktionsoberfläche (21A) des Riegels (20) derart ausgelegt sind, dass sie ermöglichen, dass eine Verlagerung des Riegels (20) in Richtung der verriegelten Position eine Verlagerung des Nockens (10) in Translation entlang der ersten Achse (Z, Z₁, Z₂) in der ersten Richtung auslöst, und/oder die zweite Interaktionsoberfläche (13B) des Nockens (10) und die vierte Interaktionsoberfläche (21B) des Riegels (20) derart ausgelegt sind, dass sie ermöglichen, dass eine Verlagerung des Riegels (20) in Richtung der entriegelten Position eine Verlagerung des Nockens (10) in Translation entlang der ersten Achse (Z, Z₁, Z₂) in der zweiten Richtung auslöst.

9. Montagevorrichtung nach den Ansprüchen 4, 5 und 8, bei der die erste Interaktionsoberfläche (13A) des Nockens (10) und die dritte Interaktionsoberfläche (21A) des Riegels (20) sich jeweils in einer Interaktionsebene erstrecken, die einen Winkel enthalten zwischen 25° und 65° mit Bezug zu einer Ebene orthogonal zur zweiten Achse (X) bildet, und/oder die zweite Interaktionsoberfläche (13B) des Nockens (10) und die vierte Interaktionsoberfläche (21B) des Riegels (20) sich jeweils in einer Interaktionsebene erstrecken, die einen Winkel enthalten zwischen 25° und 65° mit Bezug zu der Ebene orthogonal zur zweiten Achse (X) bildet.

10. Montagevorrichtung nach einem der Ansprüche 1 bis 9, bei der der Nocken (10) ein erstes und ein zweites Führungsbein (132, 133) umfasst, die sich parallel zur ersten Achse (Z, Z₁, Z₂) erstrecken und auf beiden Seiten der ersten und der zweiten Interaktionsoberfläche (13A, 13B) angeordnet sind, wobei das erste Führungsbein (132) eine erste laterale Anlageoberfläche (132A) umfasst, die sich in einer ersten Ebene parallel zur ersten und zur zweiten Achse (Z, Z₁, Z₂, X), erstreckt, wobei das zweite Führungsbein (133) eine zweite laterale Anlageoberfläche (133A) umfasst, die sich in einer zweiten Ebene parallel zur ersten und zweiten Achse (Z, Z₁, Z₂, X) erstreckt, wobei der Riegel (20) eine erste und eine zweite Durchgangsöffnung (22, 23) umfasst, die sich parallel zur ersten Achse (Z, Z₁, Z₂) erstrecken und auf beiden Seiten der dritten und vierten Interaktionsoberfläche (21A, 21B) angeordnet sind, wobei die erste Durchgangsöffnung (22) eine dritte laterale Anlageoberfläche (22A) definiert, und die zweite Durchgangsöffnung (23) eine vierte laterale Anlageoberfläche (23A) definiert, wobei die erste und die dritte laterale Anlageoberfläche (32A, 22A) dazu ausgelegt sind, derart interagieren zu können, dass sie die Verlagerung des Riegels mit Bezug zum Nocken in Translation entlang der ersten und zweiten Achse (Z, Z₁, Z₂, X) führen, und wobei die zweite und die vierte laterale Anlageoberfläche (133 A, 23A) dazu ausgelegt sind, derart interagieren zu können, dass sie die Verlagerung des Riegels mit Bezug zu dem Nocken in Translation entlang der ersten und zweiten Achse führen.

## Claims

1. An assembly device for assembling a first part (30, 50) to a second part (40, 60), the first part comprising a cam guiding bore (31, 32, 52, 53, 55, 56) extending along a first axis (Z, Z₁, Z₂) and a bolt guiding bore (34, 54, 57) extending along a second axis (X), non-parallel to the first axis (Z, Z₁, Z₂), the bolt guiding bore opening into the cam guiding bore, the second part (40) comprising an assembly bore (42, 62, 63) extending along a third axis (X), the first and second parts being arranged so that, in an assembly position, the bolt guiding bore (34, 54, 57) and the assembly bore (42, 62, 63) open into one another, the assembly device (1, 101, 102) comprising:
▪ a cam (10) arranged to be able to be translationally moved along the first axis (Z, Z₁, Z₂) into said cam guiding bore (31, 32, 52, 53, 55, 56), the cam comprising a first interaction surface (13A) and a second interaction surface (13B),
▪ a bolt (20) arranged to be able, in the assembly position of the first and second parts, to be translationally moved along the second axis (X) between a locked position, in which the bolt is inserted both in the bolt guiding bore (34, 54, 57) and the assembly bore (42, 62, 63), and an unlocked position, in which the bolt is inserted into the bolt guiding bore (34, 54, 57) and not in the assembly bore (42, 62, 63), the bolt comprising a third interaction surface (21A) and a fourth interaction surface (21B),
the first interaction surface (13A) of the cam (10) and the third interaction surface (21A) of the bolt (20) being arranged to be able to interact so that a translational movement of the cam (10) along the first axis (Z, Z₁, Z₂) in a first direction results in a movement of the bolt (20) to the locked position, and the second interaction surface (13B) of the cam (10) and the fourth interaction surface (21B) of the bolt (20) being arranged to be able to interact so that a translational movement of the cam (10) along the first axis (Z, Z₁, Z₂) in a second direction, opposite to the first direction, results in a movement of the bolt (20) to the unlocked position.

2. The assembly device according to claim 1, wherein at least one of the first interaction surface (13A), the second interaction surface (13B), the third interaction surface (21A) and the fourth interaction surface (21B) is bulging.

3. The assembly device according to one of claims 1 to 2, wherein at least one of the first interaction surface (13A), the second interaction surface (13B), the third interaction surface (21A) and the fourth interaction surface (21B) is planar.

4. The assembly device according to claim 1, wherein the first interaction surface (13A) of the cam (10) and the third interaction surface (21A) of the bolt (20) are planar and parallel to each other and/or the second interaction surface (13B) of the cam and the fourth interaction surface (21B) of the bolt (20) are planar and parallel to each other.

5. The assembly device according to one of claims 1 to 4, wherein the second axis (X) is perpendicular to the first axis (Z, Z₁, Z₂).

6. The assembly device according to one of claims 1 to 5, wherein the first interaction surface (13A) of the cam (10) and the third interaction surface (21A) of the bolt (20) are arranged so as to prevent a movement of the bolt (20) to the locked position from resulting in a translational movement of the cam (10) along the first axis (Z, Z₁, Z₂) in the first direction, and/or the second interaction surface (13B) of the cam (10) and the fourth interaction surface (21B) of the bolt (20) are arranged so as to prevent a movement of the bolt (20) to the unlocked position from resulting in a translational movement of the cam (10) along the first axis (Z, Z₁, Z₂) in the second direction.

7. The assembly device according to claims 4 to 6, wherein the first interaction surface (13A) of the cam (10) and the third interaction surface (21A) of the bolt (20) each extend in an interaction plane forming an angle lower than or equal to 25° relative to a plane perpendicular to the second axis (X), and/or the second interaction surface (13B) of the cam (10) and the fourth interaction surface (21B) of the bolt (20) each extend in an interaction plane forming an angle lower than or equal to 25° relative to the plane perpendicular to the second axis (X).

8. The assembly device according to one of claims 1 to 5, wherein the first interaction surface (13A) of the cam (10) and the third interaction surface (21A) of the bolt (20) are arranged so as to allow a movement of the bolt (20) to the locked position to result in a translational movement of the cam (10) along the first axis (Z, Z₁, Z₂) in the first direction, and/or the second interaction surface (13B) of the cam (10) and the fourth interaction surface (21B) of the bolt (20) are arranged so as to allow a movement of the bolt (20) to the unlocked position to result in a translational movement of the cam (10) along the first axis (Z, Z₁, Z₂) in the second direction.

9. The assembly device according to claims 4, 5 and 8, wherein the first interaction surface (13A) of the cam (10) and the third interaction surface (21A) of the bolt (20) each extend in an interaction plane forming an angle of between 25° and 65° relative to a plane perpendicular to the second axis (X), and/or the second interaction surface (13B) of the cam (10) and the fourth interaction surface (21B) of the bolt (20) each extend in an interaction plane forming an angle of between 25° and 65° relative to the plane perpendicular to the second axis (X).

10. The assembly device according to one of claims 1 to 9, wherein the cam (10) comprises a first and a second guiding leg (132, 133) extending parallel to the first axis (Z, Z₁, Z₂) and being arranged on either side of the first and second interaction surfaces (13A, 13B), the first guiding leg (132) comprising a first bearing side surface (132A) extending in a first plane parallel to the first and second axes (Z, Z₁, Z₂, X), the second guiding leg (133) comprising a second bearing side surface (133A) extending in a second plane parallel to the first and second axes (Z, Z₁, Z₂, X), the bolt (20) comprising a first and a second through opening (22, 23) extending parallel to the first axis (Z, Z₁, Z₂) and being arranged on either side of the third and fourth interaction surfaces (21A, 21B), the first through opening (22) defining a third bearing side surface (22A) and the second through opening (23) defining a fourth bearing side surface (23A), the first and third bearing side surfaces (132A, 22A) being arranged to be able to interact so as to translationally guide along the first and second axes (Z, Z₁, Z₂, X) the movement of the bolt relative to the cam, and the second and fourth bearing side surfaces (133A, 23A) being arranged to be able to interact so as to translationally guide along the first and second axes the movement of the bolt relative to the cam.
